# EUROPÄISCHE PATENTSCHRIFT

(11) **EP 0 874 981 B1**
(45) Veröffentlichungstag und Bekanntmachung des Hinweises auf die Patenterteilung: **26.04.2000**
(21) Anmeldenummer: 96946173.0
(22) Anmeldetag: 06.12.1996
(51) Int. Cl.: G01M 15/00, F02P 5/00

(54) **Verfahren zum Betreiben einer Zündung**
Method of operating an ignition
Procédé d'exploitation de l'allumage

(30) Priorität: 18.01.1996 DE 19601593
(43) Veröffentlichungstag der Anmeldung: 04.11.1998
(73) Patentinhaber: ROBERT BOSCH GMBH, 70442 Stuttgart (DE)
(72) Erfinder: MAYER, Ulrich, D-71332 Waiblingen (DE); KALTENBRUNN, Peter, D-74321 Bietigheim-Bissingen (DE); EDELMANN, Thomas, D-74321 Bietigheim-Bissingen (DE)
(86) Internationale Anmeldenummer: DE9602343
(87) Internationale Veröffentlichungsnummer: WO9726522

(56) Entgegenhaltungen:
- EP-A- 0 611 882
- DE-A- 4 227 104
- DE-A- 4 435 654
- US-A- 5 119 783
- US-A- 5 201 293

## Beschreibung

### Stand der Technik

Die Erfindung betrifft ein Verfahren zum Betreiben einer Zündung in einer Mehrzylinder-Brennkraftmaschine mit einer integrierten Aussetzererkennung. Aus der DE 40 35 958 C2 ist bereits eine Zündanlage für Brennkraftmaschinen bekannt, bei welcher die Drehzahl der Kurbelwelle in einem Steuergerät anhand einer Vielzahl von Marken auf einem Drehzahlgeberrad und mit einer hohen Auflösung mittels eines Sensors überwacht wird. Nach jeder erfolgten Zündung wird in einer Steuerschaltung ein vorher erfaßter und gemittelter Drehzahlwert mit dem momentanen Drehzahlwert verglichen. Bei einem Drehzahlabfall oder bei einer fehlenden positiven Beschleunigung wird ein Verbrennungsaussetzer erkannt.

### Vorteile der Erfindung

Das erfindungsgemäße Verfahren mit den Merkmalen des Hauptanspruchs hat den Vorteil, daß die Aussetzererkennung in einer Mehrzylinder-Brennkraftmaschine verbessert wird. Durch die Bildung eines Drehmomenenmittelwertes über eine vorgebbare Anzahl vorangegangener Verbrennungen kann eine Auswertung darüber erfolgen, ob das Drehmoment der aktuellen, auszuwertenden Verbrennung sehr stark von diesem Mittelwert abweicht und bei einer solchen Abweichung die Aussetzererkennung inaktiv geschaltet werden, so daß nicht fälschlicherweise auf einen Aussetzer erkannt wird. Damit ist sichergestellt, daß ein Momentensprung aufgrund einer Zündwinkelverstellung nicht zu einer Aussetzererkennung führt.

Die in den Unteransprüchen aufgeführten Maßnahmen stellen eine vorteilhafte Weiterbildung und Verbesserung des im Hauptanspruch angegebenen Verfahrens dar. Besonders vorteilhaft ist es, die Abweichung des Drehmomentes der auszuwertenden Verbrennung vom Mittelwert auf Plausibilität zu untersuchen. Damit wird geprüft, ob diese Abweichung aufgrund der ausgegebenen Steuergröße aufgetreten ist. Letztendlich ist es vorteilhaft, Zündwinkeländerungen, die beispielsweise durch eine Klopfregelung oder das Beaufschlagen mit einem Dynamikvorhalt auftreten, auf ein vorgebbares Zündwinkeländerungsband zu begrenzen. So werden große Drehmomentensprünge von Verbrennung zu Verbrennung vermieden und die Aussetzererkennung kann aktiv bleiben. Tritt trotz der Begrenzung der Zündwinkeländerung eine deutliche Abweichung der Momentenwerte auf, so kann auf einen Systemfehler geschlossen werden.

### Zeichnung

Ausführungsbeispiele der Erfindung sind in der Zeichnung dargestellt und in der nachfolgenden Beschreibung näher erläutert. Es zeigen Figur 1 den Prinzipaufbau einer Zündanlage, Figur 2 die einzelnen Verfahrensschritte des erfindungsgemäßen Verfahrens und Figur 3 die einzelnen Verfahrensschritte bei hoher Zylinderzahl.

### Beschreibung des Ausführungsbeispiels

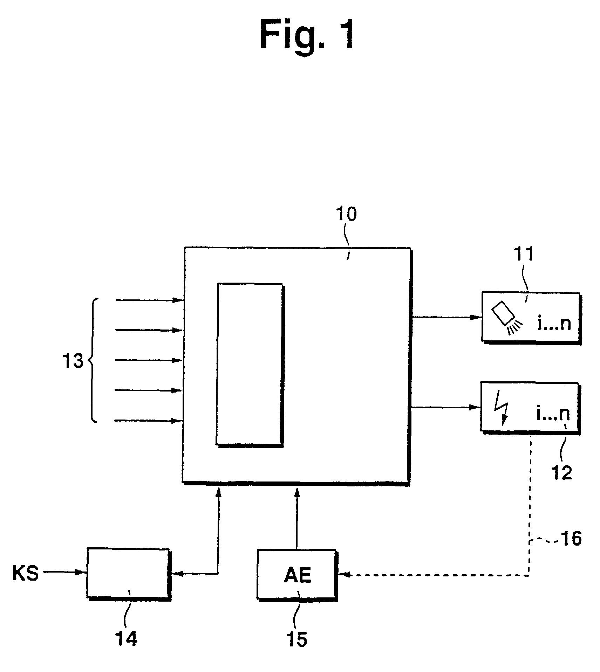

Figur 1 zeigt den Prinzipaufbau einer Zündanlage, wobei einem Steuergerät 10, welches die Einspritzung 11 und die Zündung 12 in den einzelnen Zylindern einer Brennkraftmaschine steuert, die von nicht dargestellten Sensoren erfaßten Parameter der Brennkraftmaschine als Eingangsgrößen 13 zugeführt. Ein Klopfsensor KS erfaßt die Motorgeräusche und führt sie einer Klopfauswerteschaltung 14 zu, welche dann ein Signal an das Steuergerät 10 weiterleitet. Damit liegt im Steuergerät 10 die Information vor, ob eine klopfende oder eine nichtklopfende Verbrennung stattgefunden hat. Desweiteren ist eine Aussetzererkennungsstufe 15 mit dem Steuergerät verbunden. Diese Aussetzererkennungsstufe 15 ist mit den einzelnen Zylindern der Brennkraftmaschine verbunden, wobei diese Verbindung 16 hier als gestrichelte Linie dargestellt ist. Es existieren verschieden Arten der Aussetzererkennung, so kann beispielsweise ein Laufunruheverfahren durchgeführt werden, es kann eine Überwachung der auf die Primärseite transformierten Brennspannung vorgenommen werden oder auch eine Funkendauerauswertung erfolgen. Jede dieser Möglichkeiten der Aussetzererkennung ist bereits bekannt und soll hier nicht im einzelnen erläutert werden. Deshalb ist in der Figur 1 die Aussetzererkennung nur als Block angegeben und die Verbidung 16 stellt lediglich dar, daß zur Aussetztererkennung eine solche Verbindung.

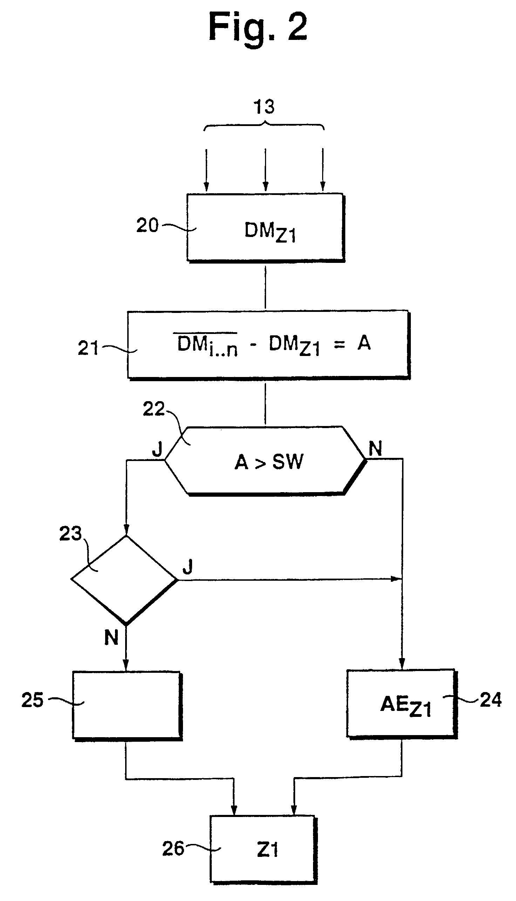

In Figur 2 ist das Prinzip des erfindungsgemäßen Verfahrens dargestellt. In einem ersten Arbeitsschritt 20 wird nach Verbrennung aus den erfaßten Größen das Drehmoment DM_{Z1} der Brennkraftmaschine bestimmt. Hier wurde zur Verdeutlichung Zylinder Z1 ausgewählt. Nun wird dieses aktuell bestimmte Drehmoment DM_{Z1} mit dem Mittelwert der Drehmoment aller Zylinder DMᵢ₋ₙ verglichen, indem im Arbeitsschritt 21 die Differenz A = DMᵢ₋ₙ - DM_{Z1} gebildet wird. Ist diese Differenz A in einer anschließenen Abfrage 22 größer als ein vorgebbarer Schwellwert, so wird in einer Abfrage 23 geprüft, ob diese Abweichung plausibel ist. Das bedeutet, es wird geprüft, ob diese Drehmomentenveränderung des Zylinders Z1 aufgrund von veränderten Steuersignalen für Einspritzung und Zündung aufgetreten ist. War diese Abweichung plausibel vor dem Hintergrund der ausgegebenen Steuergrößen, dann wird in einem Arbeitsschritt 24 die Aussetzererkennung für diesen Zylinder Z1 durchgeführt. War die Drehmomentenabweichung nicht plausibel, dann wird im Arbeitsschritt 25 die Aussetzererkennung inaktiv geschaltet. Anschließend wird im Arbeitsschritt 26 zurückgesprungen und nun der nächste zu zündende Zylinder hier Zylinder Z2 ausgewertet.

Bei Mehrzylinder-Brennkraftmaschinen mit einer großen Anzahl von Zylindern, also beispielsweise acht oder zwölf Zylinder, wird häufig eine Aufteilung dieser Zylinder in zwei Zylinderbänke vorgenommen und dann für jede Zylinderbank ein Steuergerät vorgesehen. Bei einer Zwölfzylinder-Brennkraftmaschine werden so sechs Zylinder von einem ersten und sechs Zylinder von einem zweitem Steuergerät angesteuert. Jedes dieser Steuergeräte steuert damit separat aufgrund der Betriebsparameter den Betrieb der zugehörigen Zylinderbank. Beide Steuergerät können über einen Datanbus miteinander verbunden sein und so Informationen untereinander austauschen. Jede Zylinderbank wird aber im wesentlichen für sich von einem Steuergerät gesteuert. Für einen hohen Fahrkomfort ist es wesentlich, daß hier in beiden Zylinderbänken etwa die gleiche Kraftumsetzung stattfindet. Treten sehr starke Unterschiede der Drehmomente der beiden Zylinderbänke auf, so wird dies als Systemfehler betrachtet. Ursache hierfür können unterschiedliche Füllungen, unterschiedliche Spätverstellungen auf einer Motorbank sein. Unterscheiden sich die Motormomente der Bankmittelwerte um einen Betrag, der größer als eine vorgebbare Schwelle ist, so wird dies als Fehler im Steuergerät registriert. Durch diese unterschiedlichen Motormomente ist die Aussetzererkennung mittels Momentenauswertung oder mittels Laufunruheauswertung nicht sichergestellt und die Aussetzererkennung wird für diesen Fall ausgeblendet

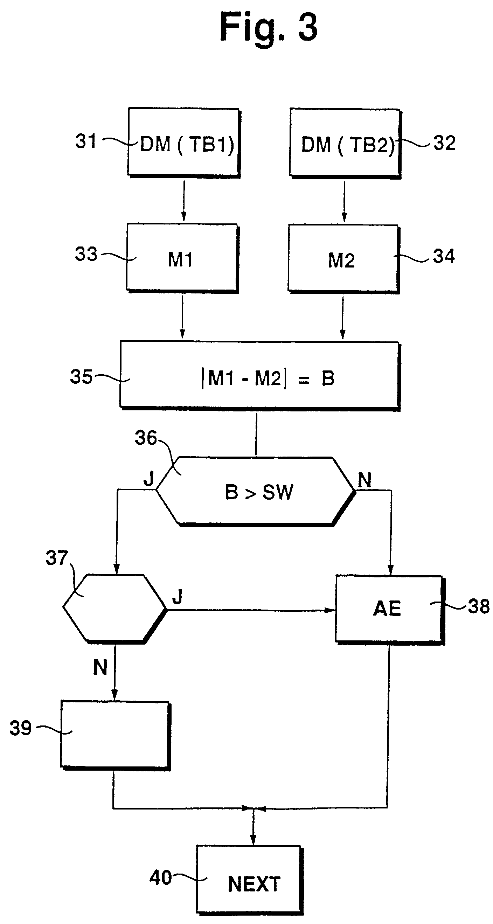

Anhand von Figur 3 soll erläutert werden, wie die Drehmomente der unterschiedlichen Zylinderbänke ausgewertet werden. Im wesentlichen ist dies dem Verfahren in Figur 2 ähnlich. Der Einfachheit halber werden die einzelnen Zylinderbänke in eine erste Zylinderbanke ZB1 und die zweite Zylinderbank ZB2 unterschieden. In einem Arbeitsschritt 31 werden die Drehmomente für die Zylinder der ersten Zylinderbanke ZB1 und in einem Arbeitsschritt 32 die Drehmomente für die Zylinder der zweiten Zylinderbank ZB2 bestimmt. Anschließend werden in den Arbeitsschritten 33 und 34 die jeweiligen Bankmittelwerte der Drehmomente erfaßt, wobei im Arbeitsschritt 33 der Mittelwert M1 der Drehmomente der Zylinder der ersten Zylinderbank und im Arbeitsschritt 34 der Mittelwert M2 der Drehmomente der Zylinder der zweiten Zylinderbank ZB2 berechnet wird. In einem anschließenden Arbeitsschritt 35 wird nun die Differenz B der beiden Mittelwerte M1 un M2 bestimmt. Diese Differenz B wird in einer anschließenden Abfrage 36 mit einem vorgebbaren Schwellwert SW verglichen. Ist diese Differenz B größer als der Schwellwert Sw, dann wird in einem anschließenden Arbeitsschritt 37 geprüft, ob die Abweichung der Mittelwerte M1 und M2 voneinander aufgrund der ausgegebenen Steueregelrößen plausibel ist. Das bedeutet, wie zu Figur 2 erläutert, ist die Abweichung begründet, so führt der Ja-Ausgang der Abfrage 37 zu einem Arbeitsschritt 38. Der Nein-Ausgang der Abfrage 36, d.h. die Differenz B ist kleiner als der vorgebbare Schwellwert SW, führt ebenfalls zum Arbeitsschritt 38. Damit ist im Steuergerät die Information abgelegt, daß die Aussetzererkennung aufgrund von Drehmomentenauswertung durchführbar ist. Wurde jedoch die Abfrage 37 mit nein beantwortet, dann wird auf einen Systemfehler geschlossen und die Aussetzererkennung außer Kraft gesetzt, wie dies im Arbeitsschritt 39 dargestellt ist. Anschließend wird im Arbeitsschritt 40 zurückgesprungen an den Anfang dieser Abfrage und im nächsten Verbrennungszyklus eine erneute Auswertung vorgenommen.

## Patentansprüche

1. Verfahren zum Betreiben einer Zündung in einer Mehrzylinder-Brennkraftmaschine mit einer integrierten Aussetzererkennung, wobei mindestens eine Steuergröße für die Zündung anhand erfaßter Parameter bestimmt wird, wobei die Zündung durch die mindestens eine Steuergröße ausgelöst wird, wobei nach der Ausgabe der mindestens einen Steuergröße zum Auslösen einer Zündung das Drehmoment der durch die Zündung ausgelösten Verbrennung erfaßt und mit einem Mittelwert der Drehmomente vorangegangener Verbrennungen verglichen wird, daß wenn eine Abweichung des aktuell erfaßten Drehmomentes vom Mittelwert der Drehmomente einer vorgebbaren Anzahl vorangegangener Verbrennungen größer als eine vorgebbare Schwelle erkannt wird, geprüft wird, ob diese Abweichung mit Hinblick auf die mindestens eine ausgegebene Steuergröße plausibel ist daß, wenn diese Abweichung plausibel ist, eine Aussetzererkennung durchgeführt wird, und daß, wenn diese Abweichung nicht plausibel ist, die Aussetzererkennung inaktiv geschaltet wird.

2. Verfahren nach Anspruch 1, dadurch gekennzeichnet, daß für den Plausibilitätsvergleich die Zündverstellung aufgrund der Klopfregelung bewertet wird.

3. Verfahren nach Anspruch 1, dadurch gekennzeichnet, daß für den Plausibilitätsvergleich die Zündverstellung aufgrund von Dynamikvorhalt bewertet wird.

## Claims

1. Method of operating an ignition system in a multicylinder internal combustion engine having an integrated misfire detector, at least one control variable for the ignition being determined with reference to parameters which have been sensed, in which the ignition is triggered by the at least one control variable, and in which, in order to trigger an ignition, the torque of the combustion which is triggered by the ignition is sensed after the at least one control variable has been output, and is compared with a mean value of the torques of preceding combustions, in that if a deviation of the currently sensed torque from the mean value of the torques of a predefinable number of preceding combustions is detected as being higher than a predefinable threshold, it is checked whether this deviation is plausible in terms of the at least one output control variable, in that, if this deviation is plausible, a misfire detection is carried out, and in that, if this deviation is not plausible, the misfire detector is deactivated.

2. Method according to Claim 1, characterized in that for the plausibility comparison the ignition adjustment is evaluated on the basis of the knocking control.

3. Method according to Claim 1, characterized in that for the plausibility comparison the ignition adjustment is evaluated on the basis of dynamic derivative action.

## Revendications

1. Procédé de mise en oeuvre d'un allumage d'un moteur à combustion interne à plusieurs cylindres avec une détection intégrée des ratés,
selon lequel :
- on détermine au moins une grandeur de commande pour l'allumage à l'aide des paramètres détectés,
- l'allumage est déclenché par au moins une grandeur de commande,
- et après émission d'au moins une grandeur de commande pour déclencher un allumage, on détecte le couple de la combustion déclenchée par l'allumage et on compare ce couple à une valeur moyenne provenant des couples des combustions antérieures,
- et si la déviation du couple réellement saisi diffère de la valeur moyenne des couples correspondant à un nombre prédéterminé de combustions antérieures, et est supérieur à un seuil reconnu, on vérifie si cette déviation est plausible du point de vue d'au moins une grandeur de commande émise, pour que si la déviation est plausible, on effectue une détection de ratés et si la déviation n'est pas plausible, on met la détection de ratés au repos.

2. Procédé selon la revendication 1,
caractérisé en ce que
pour la comparaison de la plausibilité, on exploite le réglage de l'allumage en fonction de la régulation du cliquetis.

3. Procédé selon la revendication 3,
caractérisé en ce que
pour la comparaison de la plausibilité, on exploite le réglage de l'allumage selon une dérivée dynamique.
